# DEMANDE DE BREVET EUROPEEN

(11) **EP 2 378 022 A1**
(43) Date de publication de la demande: **19.10.2011**
(21) Numéro de dépôt: 11162416.9
(22) Date de dépôt: 14.04.2011
(51) Int. Cl.: E04B 7/16, E04H 15/20, E04H 4/10, B60J 7/08

(54) **Dispositif et procede de bachage/debachage**

(30) Priorité: 14.04.2010 FR 1052849
(71) Demandeur: Gurdebeke SA, 60640 Fretoy Le Chateau (FR)
(72) Inventeur: Gurdebeke, Alain, 60400 Baboeuf (FR)
(74) Mandataire: Casalonga, Axel

(57) **Abrégé**

Dispositif de bâchage/débâchage comprenant une bâche gonflable (7) et un système de gonflage apte à déployer, par gonflage, la bâche gonflable (7) à partir d'une position initiale et à dégonfler la bâche gonflable (7), la bâche gonflable (7) comprenant un moyen de rappel qui est apte à ramener la bâche gonflable (7) dans ladite position initiale lorsque le système dégonfle la bâche gonflable (7).

## Description

L'invention concerne le bâchage et le débâchage d'une structure.

Actuellement, on peut recouvrir des surfaces à l'aide de bâches faites en toile ou en tissu, imperméables ou non, de manière manuelle. Mais il n'existe pas de systèmes automatisés pour bâcher et débâcher des grandes surfaces, comme par exemple des pelouses de stade ou des parties d'immeubles.

Par ailleurs, lorsqu'on souhaite bâcher et débâcher des structures ayant une ouverture située en hauteur par rapport au sol, par exemple une benne montée sur un véhicule, les utilisateurs doivent monter sur la structure afin de placer manuellement la bâche. Dans ce cas, les utilisateurs se retrouvent dans en position élevée par rapport au sol, ce qui entraîne un risque de chute des utilisateurs et accroît la dangerosité de leur travail.

Il existe actuellement des systèmes comprenant des bras articulés situés sur les véhicules automobiles et qui permettent aux utilisateurs de déployer automatiquement une bâche en toile sur les bennes tout en restant sur le sol en évitant ainsi de monter sur le véhicule, ou sur le sommet de la benne. Mais ces systèmes sont coûteux et mal adaptés car ils ne permettent pas de couvrir complètement les objets qui dépassent du sommet de la benne. En effet, lorsque ces systèmes déploient la bâche sur la benne, cette bâche peut se déchirer lorsque des objets tranchants dépassent de la benne. En outre, ces systèmes imposent qu'un utilisateur monte sur le sommet de la benne pour contrôler le déploiement de celle-ci afin de couvrir convenablement le contenu de la benne et pour prévenir des déchirements possibles de celle-ci.

Il existe aussi des systèmes pour bâcher/débâcher des piscines, comme par exemple des toiles en matière plastique que l'on déploie manuellement mais qui ne sont pas automatisés. Il existe également des systèmes automatiques pour déployer des bâches faites de lattes en bois ou en aluminium, mais ces systèmes sont coûteux, complexes, peu robustes et tombent souvent en panne.

Un des buts de l'invention est donc de fournir un dispositif et un procédé de bâchage et de débâchage permettant de répondre aux besoins évoqués précédemment et, en particulier, de proposer un dispositif et un procédé pour couvrir de manière automatique des structures qui soient peu coûteux et qui soient simples à utiliser.

Selon un aspect, il est proposé un dispositif de bâchage/débâchage comprenant une bâche gonflable et un système de gonflage apte à déployer, par gonflage, la bâche gonflable à partir d'une position initiale et à dégonfler la bâche gonflable.

Dans ce dispositif, la bâche gonflable comprend un moyen de rappel qui est apte à ramener la bâche gonflable dans ladite position initiale lorsque le système dégonfle la bâche gonflable.

Grâce au moyen de rappel, on fournit un moyen automatisé pour bâcher et débâcher tout type de structure.

En outre, à l'aide d'une bâche gonflable, on peut déployer, de manière automatique et suffisamment lentement, la bâche sur la structure à bâcher de manière à protéger la bâche d'éventuels déchirements par rapport au déploiement d'une simple bâche en toile.

La position initiale peut, par exemple, correspondre à une position enroulée de la bâche gonflable.

Ce qui permet d'économiser de la surface pour stocker la bâche lorsque celle-ci n'est pas déployée.

Le moyen de rappel peut comprendre au moins un ressort à spirales.

Selon un mode de réalisation, le système de gonflage comprend un réservoir de fluide, un circuit de gonflage couplé au réservoir de fluide et à la bâche gonflable, et une vanne de gonflage commandée pour respectivement remplir et vider la bâche gonflable à l'aide du fluide.

Ainsi, on fournit un moyen simple et peu encombrant pour bâcher et débâcher tout type de structure.

Le fluide peut être un air comprimé ou un liquide incompressible.

On peut ainsi fournir un moyen de bâchage et de débâchage qui utilise des forces pneumatiques ou hydrauliques et qui consomme peu d'énergie électrique.

Avantageusement, le dispositif comprend des moyens de maintien pour maintenir la bâche gonflable dans une position déployée lorsque celle-ci est gonflée ou dégonflée.

Selon un autre mode de réalisation, le dispositif comprend un mât télescopique pour recevoir la bâche gonflable et un circuit de levage du mât télescopique couplé au réservoir de fluide et muni d'une vanne de levage commandée pour lever et descendre le mât télescopique.

A l'aide d'un mât réglable, on peut régler la hauteur de la bâche de manière à placer celle-ci au dessus de la structure à bâcher. On peut ainsi, empêcher la bâche gonflable de se déchirer lors du bâchage et du débâchage de la structure.

Selon un autre aspect, il est proposé un procédé de bâchage/débâchage dans lequel on gonfle une bâche gonflable pour la déployer à partir d'une position initiale.

Dans ce procédé, on dégonfle la bâche gonflable pour ramener la bâche gonflable dans ladite position initiale.

Selon un mode de mise en oeuvre, on maintient la bâche gonflable dans une position déployée lorsque celle-ci est gonflée ou dégonflée.

D'autres avantages et caractéristiques apparaîtront à l'examen de la description détaillée de modes de réalisation et de mise en oeuvre de l'invention, nullement limitatifs, et des dessins annexés sur lesquels :
- la figure 1 illustre de façon schématique un dispositif de bâchage et de débâchage selon un mode de réalisation de l'invention ;
- la figure 2 illustre de façon schématique un mode de mise en oeuvre du bâchage d'une benne de véhicule automobile ;
- la figure 3 illustre de façon schématique un mode de mise en oeuvre du maintien d'une bâche sur la benne ;
- la figure 4 illustre de façon schématique un mode de mise en oeuvre du débâchage de la benne ; et
- les figures 5 et 6 illustrent de façon schématique d'autres modes de réalisation de l'invention.

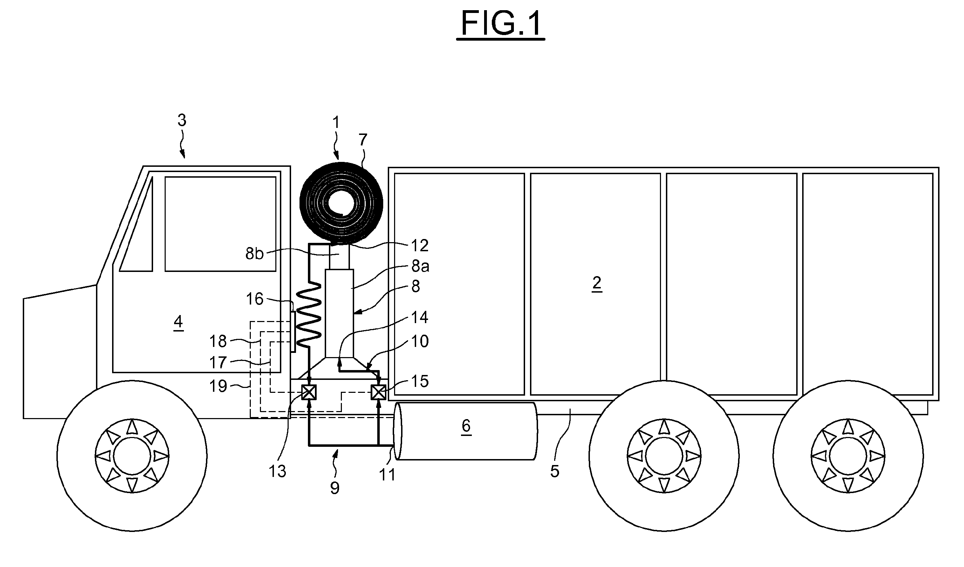

Sur la figure 1, on a représenté un dispositif 1 de bâchage et de débâchage selon un mode de réalisation de l'invention. Dans ce mode de réalisation, le dispositif est particulièrement bien adapté à une benne 2 d'un véhicule automobile 3. Ce dispositif peut, bien sûr, être utilisé pour bâcher/débâcher d'autres types de structure, comme par exemple une piscine, une partie d'immeuble, une fosse...

Sur la figure 1, le véhicule automobile 3 comprend une cabine de conduite 4 du véhicule située à l'avant du véhicule 3 et un plateau 5 destiné à recevoir la benne 2 et situé à l'arrière de la cabine de conduite 4.

Le dispositif 1 de bâchage et de débâchage comprend en outre une bâche gonflable 7 et un système de gonflage et de dégonflage 9 de la bâche gonflable 7.

Le système de gonflage et de dégonflage 9, noté ci-après système de gonflage, comprend un réservoir 6 de fluide qui peut être soit de l'air comprimé, soit un liquide incompressible lorsqu'on souhaite utiliser respectivement des forces pneumatiques ou hydrauliques.

Le système de gonflage 9 est raccordé à une sortie 11 du réservoir 6 et à une entrée 12 de la bâche gonflable 7. Le système de gonflage 9 est en outre muni d'une vanne de gonflage 13 commandée pour gonfler et dégonfler la bâche gonflable 7.

Le dispositif 1 comprend également un mât télescopique 8, et un circuit de levage et de descente 10 du mât télescopique 8.

Le circuit de levage et de descente 10, noté ci-après circuit de levage, est raccordé à la sortie 11 du réservoir 6 et à une entrée 14 du mât télescopique 8. Le circuit de levage 10 est en outre muni d'une vanne de levage 15 commandée pour lever et descendre le mât télescopique 8.

Le dispositif 1 comprend également un boîtier de commande 16 pour commander la vanne de gonflage 13, la vanne de levage 15 et le réservoir 6, respectivement par des connexions 17,18 et 19. Ce boîtier de commande 16 est situé à une hauteur adaptée pour que l'utilisateur puisse commander le gonflage/dégonflage et le levage/descente du mât depuis le sol, sans avoir à monter sur le véhicule 3.

La commande d'ouverture/fermeture du réservoir 6 de fluide est quant à elle automatique en fonction des commandes reçues par le boîtier de commande 16.

Le mât télescopique 8 comprend au moins deux parties 8a, 8b. Une première partie 8a comprend un élément cylindrique monté fixe sur un pied pour fixer le mât télescopique 8 sur le véhicule 3. Le mât télescopique 8 est de préférence fixé sur le plateau 5 entre la cabine de conduite 4 et la benne 2, il peut bien sûr être fixé sur d'autres parties du véhicule 3, par exemple en arrière de la benne 2. La deuxième partie 8b comprend un autre élément cylindrique dont le diamètre est inférieur à celui de l'élément cylindrique de la première partie 8a. Par ailleurs, la deuxième partie 8b est apte à se déplacer de bas en haut, et inversement, sous l'action du fluide sortant du réservoir 6 commandé par l'ouverture et la fermeture de la vanne de levage 15. En outre, la deuxième partie 8b du mât télescopique 8 a son extrémité supérieure fixée à la bâche gonflable 7 et permet de lever et descendre celle-ci suivant les besoins.

La bâche gonflable 7 est dans une position initiale correspondant à une position enroulée lorsque celle-ci est stockée, c'est-à-dire lorsque la bâche gonflable 7 est non déployée.

La bâche gonflable 7 est montée sur le sommet du mât télescopique 8. Elle comprend au moins un ressort, de préférence à spirales, qui s'enroule sur lui-même lorsque la bâche gonflable 7 est dégonflée. Par ailleurs, ce ressort à spirales, non représenté sur la figure à des fins de simplification, est logé dans une gaine prévue à l'intérieure de la bâche gonflable 7. En variante, la bâche gonflable 7 peut comprendre plusieurs gaines pour loger chacune un ressort à spirales.

Nous allons illustrer aux figures 1 à 4 un mode de mise en oeuvre du procédé de bâchage/débâchage selon l'invention appliqué à la benne 2 de véhicule 3 décrite ci avant.

Le procédé de bâchage/débâchage, noté ci-après procédé de bâchage, de la benne de véhicule comprend les étapes suivantes.

Sur la figure 1, on a représenté une étape initiale du procédé de bâchage dans laquelle la bâche gonflable 7 est dans une position initiale où celle-ci est enroulée. Dans cette position initiale, les vannes de gonflage 13 et de levage 15 sont fermées et empêchent le fluide de sortir du réservoir 6. Cette étape initiale peut être réalisée avant le chargement de la benne 2. Le mât télescopique 8 est dans ce cas dans une position basse.

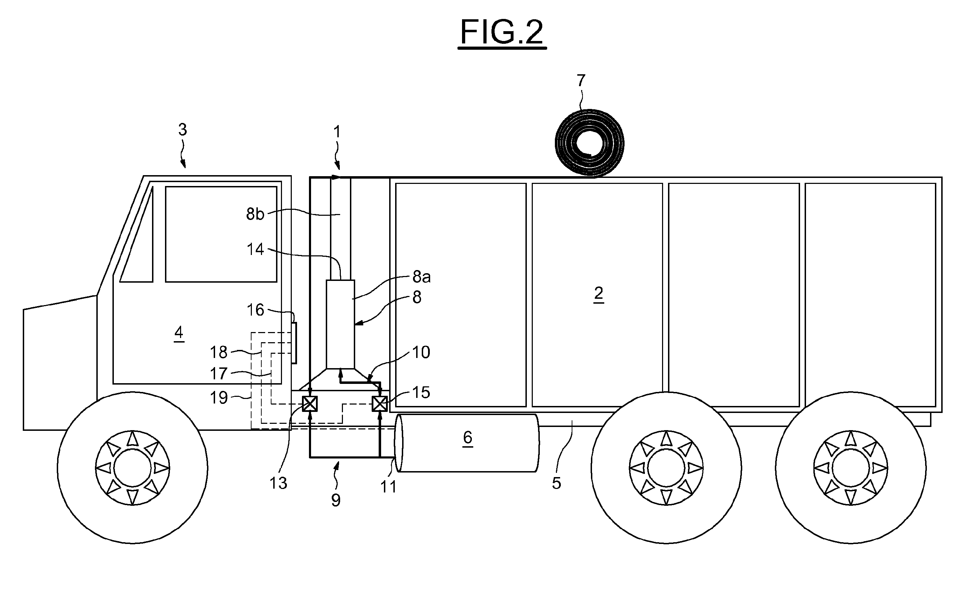

Sur la figure 2, on a représenté un mode de mise en oeuvre du bâchage de la benne 2.

Lorsqu'on souhaite bâcher la benne 2, on ouvre la vanne de levage 15 de manière à déployer le mât télescopique pour ajuster la hauteur de la bâche gonflable 7 par rapport à la hauteur de la benne 2. Sous l'effet de la circulation du fluide dans le circuit de levage 10, depuis le réservoir 6, la deuxième partie du mât 8b se déploie vers le haut et fait monter la bâche gonflable 7. On peut également prévoir de dépasser la hauteur de la benne 2 de façon que la bâche gonflable 7 puisse être placée au-dessus des objets encombrants qui pourraient dépasser de l'ouverture de la benne 2. Puis, on ouvre la vanne de gonflage 13 de manière à dérouler la bâche gonflable sur la benne 2. Sous l'effet de la circulation du fluide dans le circuit de gonflage 9, depuis le réservoir 6, la bâche gonflable 7 se déploie sur toute la longueur de la benne, jusqu'à sont extrémité arrière, voire au-delà dans le cas où on prévoit une longueur de bâche supérieure à la longueur de la benne 2.

Le ressort à spirales est alors configuré pour que sa force de rappel soit inférieure à la force générée par le gonflage de la bâche gonflable 7 pour que celle-ci puisse être déployée.

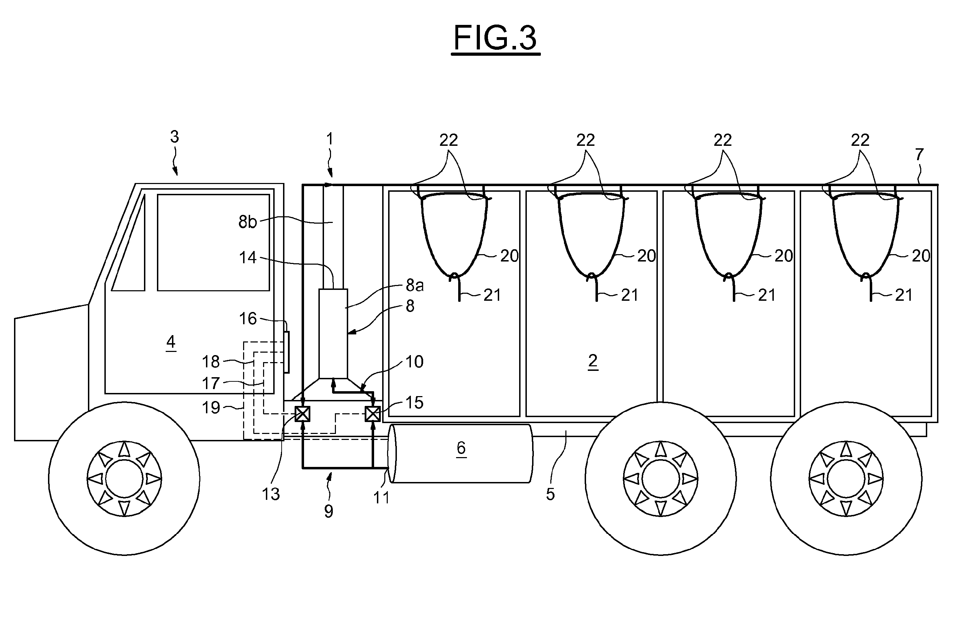

Sur la figure 3, on a représenté, de façon schématique, un mode de mise en oeuvre du maintien d'une bâche sur la benne 2.

Une fois la bâche gonflable 7 déployée sur la benne 2, on peut maintenir la bâche gonflable 7 à l'aide de moyens de maintien.

Ces moyens de maintien peuvent être, par exemple des sangles 20 montées sur des crochets 21 prévus sur la partie supérieure de la benne 2 et sur des crochets 22 prévus sur les bords latéraux de la bâche gonflable 7.

On bloque ensuite le mât télescopique 8 à l'aide de moyens de blocage, comme par exemple en fermant la vanne de levage 15. On peut ensuite libérer le fluide du circuit de gonflage 9 en ouvrant la vanne de gonflage 13 vers l'extérieur, ou vers un réservoir supplémentaire, non représenté sur la figure, de manière à vider le circuit de gonflage 9. Le véhicule peut alors se déplacer en toute sécurité pour transporter le contenu de la benne 2.

Les moyens de maintien sont alors configurés pour que la force de maintien soit supérieure à la force de rappel générée par le ressort à spirales pour que la bâche gonflable 7 puisse être maintenue dans une position déployée.

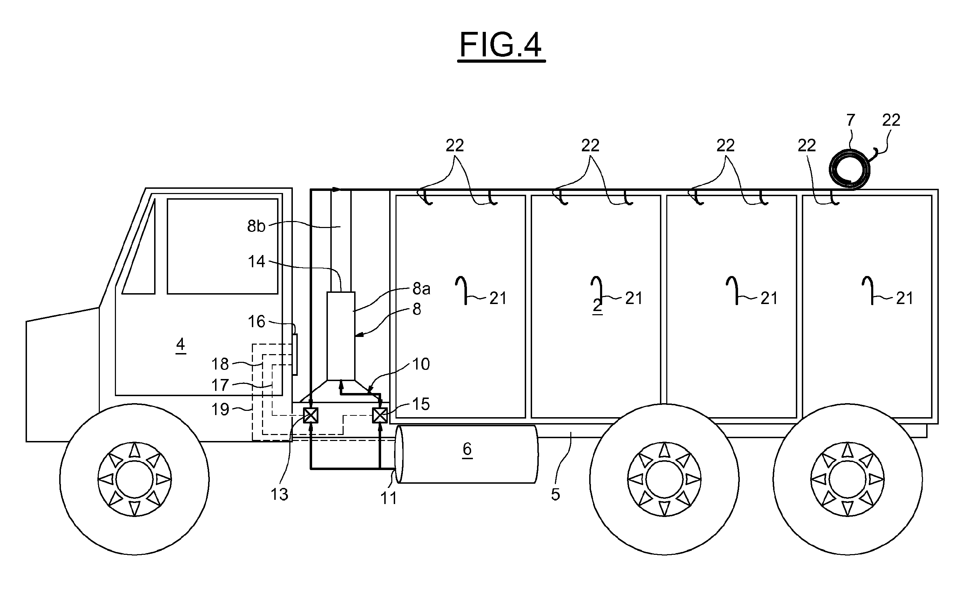

Sur la figure 4, on a représenté un mode de mise en oeuvre du débâchage de la benne 2.

Lorsque le véhicule est à l'arrêt, on dégonfle la bâche gonflable en ouvrant la vanne de gonflage 13 vers l'extérieur, ou vers un réservoir supplémentaire, non représenté sur la figure, de manière à dégonfler presque en totalité la bâche. Après cette étape de dégonflage de la bâche gonflable 7, on retire les sangles 20 de tous les crochets 21,22. En dégonflant la bâche gonflable 7, la rigidité de celle-ci diminue et de ce fait, les ressorts à spirales s'enroulent, par leur force de rappel, entraînant un enroulement automatique de la bâche gonflable 7 sur elle-même. Lors du dégonflage de la bâche gonflable 7, la force de rappel du ressort à spirales devient supérieure à la force générée par la pression régnant dans la bâche gonflable 7 et cette dernière reprend sa position initiale.

Ainsi, grâce au procédé et au dispositif qui viennent d'être décrits, on fournit un moyen automatisé pour bâcher et débâcher facilement une structure, comme par exemple une benne de véhicule.

Ce procédé et ce dispositif sont particulièrement adaptés à des bennes ouvertes dont le contenu peut dépasser en hauteur le sommet de la benne et qui préviennent des déchirures potentielles occasionnées par des objets tranchants.

Dans encore un autre mode de réalisation, on peut utiliser les systèmes hydrauliques et pneumatiques déjà en place sur les véhicules pour la gestion des freins, ou d'autres systèmes qui utilisent les forces pneumatiques et hydrauliques. De cette manière, on ne surcharge pas le véhicule et on diminue la consommation électrique de ce dernier.

La situation du mât placé entre la cabine de conduite du véhicule et la benne permet de pouvoir retirer ou monter facilement la benne sur le plateau arrière du véhicule lorsque celui-ci est configuré pour transporter des bennes amovibles.

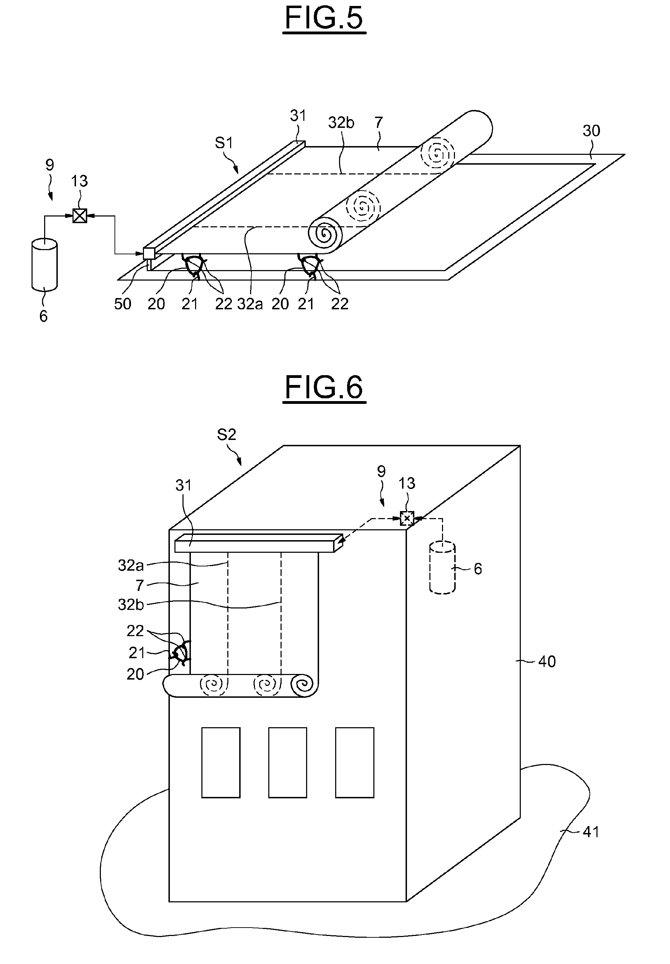

Sur la figure 5 on a représenté schématiquement un autre mode de réalisation de l'invention dans lequel un dispositif de bâchage/débâchage S1 est utilisé pour bâcher/débâcher une piscine 30.

Le dispositif S1 comprend certains éléments décrits aux figures précédentes. En particulier, il comprend un mât 50 non télescopique, monté sur un des bords de la piscine 30 et sur lequel est monté la bâche gonflable 7 par l'intermédiaire d'un circuit de répartition de fluide 31.

Le circuit de répartition de fluide 31 est couplé au système de gonflage 9, décrit précédemment à la figue 1, et permet, notamment, de répartir uniformément le fluide dans la bâche gonflable 7.

En variante, le mât 50 non télescopique peut être remplacé par le mât télescopique 8 décrit à la figure 1.

On a également représenté deux ressorts à spirales 32a, 32b qui forment le moyen de rappel de la bâche gonflable 7.

Sur la figure 6 on a représenté schématiquement encore un autre mode de réalisation de l'invention dans lequel un dispositif de bâchage/débâchage S2 est utilisé pour bâcher/débâcher une partie d'un immeuble 40.

Le dispositif S2 comprend certains éléments décrits aux figures précédentes. En particulier, ce dispositif S2 permet de déployer la bâche gonflable 7 de manière sensiblement perpendiculaire au sol 41.

En variante, le système de gonflage 9, représenté ici en tirets, peut être intégré dans ou à l'extérieur de l'immeuble 40.

Le dispositif et le procédé de bâchage/débâchage qui viennent d'être décrits sont donc adaptés pour automatiser le bâchage/débâchage de tout type de structure.

## Revendications

1. Dispositif de bâchage/débâchage comprenant une bâche gonflable (7) et un système de gonflage apte à déployer, par gonflage, la bâche gonflable (7) à partir d'une position initiale et à dégonfler la bâche gonflable (7), **caractérisé en ce que** la bâche gonflable (7) comprend un moyen de rappel qui est apte à ramener la bâche gonflable (7) dans ladite position initiale lorsque le système dégonfle la bâche gonflable (7).

2. Dispositif selon la revendication 1, dans lequel la position initiale correspond à une position enroulée de la bâche gonflable (7).

3. Dispositif selon l'une des revendications 1 ou 2, dans lequel le moyen de rappel comprend au moins un ressort à spirales.

4. Dispositif selon l'une des revendications 1 à 3, dans lequel le système de gonflage (9) comprend un réservoir de fluide (6), un circuit de gonflage (9) couplé au réservoir de fluide (6) et à la bâche gonflable (7), et une vanne de gonflage (13) commandée pour respectivement remplir et vider la bâche gonflable (7) à l'aide du fluide.

5. Dispositif selon l'une des revendications 1 à 4, dans lequel le fluide est un air comprimé ou un liquide incompressible.

6. Dispositif selon l'une des revendications 1 à 5, comprenant des moyens de maintien pour maintenir la bâche gonflable (7) dans une position déployée lorsque celle-ci est gonflée ou dégonflée.

7. Dispositif selon l'une des revendications 1 à 6, comprenant un mât télescopique (8) pour recevoir la bâche gonflable (7) et un circuit de levage (10) du mât télescopique (8) couplé au réservoir (6) de fluide et muni d'une vanne de levage (15) commandée pour lever et descendre le mât télescopique (8).

8. Procédé de bâchage/débâchage, dans lequel on gonfle une bâche gonflable (7) pour la déployer à partir d'une position initiale, **caractérisé en ce qu'**on dégonfle la bâche gonflable (7) pour ramener la bâche gonflable (7) dans ladite position initiale.

9. Procédé selon la revendication 8, dans lequel on maintient la bâche gonflable (7) dans une position déployée lorsque celle-ci est gonflée ou dégonflée.
